# FASCICULE DE BREVET EUROPEEN

(11) **EP 2 878 838 B1**
(45) Date de publication et mention de la délivrance du brevet: **27.06.2018**
(21) Numéro de dépôt: 14194383.7
(22) Date de dépôt: 21.11.2014
(51) Int. Cl.: F16C 19/36, F16C 43/08, F16C 33/54

(54) **Palier à roulement avec cage pour rouleaux coniques**
Kegelrollenlager mit Rückhaltekäfig für Rollkörpern
Roller bearing comprising a cage for retaining tapered rolling bodies

(30) Priorité: 28.11.2013 FR 1361806
(43) Date de publication de la demande: 03.06.2015
(73) Titulaire: NTN-SNR Roulements, 74010 Annecy (FR)
(72) Inventeur: Faugeras, Gilles, 73630 Le Chatelard (FR); Pourroy-Solari, Vincent, 74230 Thones (FR); Maille, Renaud, 74000 Annecy (FR)
(74) Mandataire: Sayettat, Julien Christian

(56) Documents cités:
- WO-A1-2013/052822
- FR-A1- 2 600 131
- GB-A- 629 766
- US-A- 1 982 899
- US-A- 2 049 040
- US-A- 2 106 127

## Description

L'invention concerne un procédé d'assemblage d' palier à roulement comprenant une bague extérieure et une bague intérieure pourvues chacune d'une piste annulaire de roulement entre lesquelles sont disposés des corps roulants de sorte à permettre la rotation relative desdites bagues. L'invention concerne également un procédé d'assemblage d'un tel palier à roulement.

En particulier, l'invention s'applique aux paliers à roulement de type conique dans lesquels des rouleaux coniques sont utilisés en relation avec des pistes de roulement tronconiques équipant une bague extérieure appelée cuvette et une bague intérieure appelée cône. Plus précisément, chacune des pistes de roulement présente une portée axiale sur laquelle les rouleaux coniques sont en appui par l'intermédiaire de leur périphérie tronconique, lesdites portées axiales s'étendant chacune entre un bord extérieur et un bord intérieur en présentant une géométrie tronconique.

Ce type de palier, de par son aptitude à supporter des efforts radiaux et axiaux importants, trouve particulièrement son application pour le guidage en rotation d'organe mécanique de transmission de couple, notamment dans des ponts moteurs de véhicule automobile, en étant utilisé par exemple en paire dans un montage en X.

De façon conventionnelle, le maintien des rouleaux coniques entre les pistes de roulement est assuré par une cage de rétention présentant une couronne extérieure, une couronne intérieure et une pluralité de ponts s'étendant entre lesdites couronnes de sorte à former entre deux ponts adjacents et un segment de chacune desdites couronnes un logement dans lequel un rouleau est retenu en pouvant tourner autour de son axe propre.

En outre, notamment lorsque le palier est soumis à des charges axiales, la bague intérieure est classiquement équipée d'un collet qui présente une portée latérale de roulement sur laquelle les rouleaux coniques sont en appui par l'intermédiaire d'une face latérale. On connaît également, notamment du document FR-2 600 131, un palier à roulement conique dit inversé dans lequel le collet est formé sur un côté de la piste de roulement de la bague extérieure.

La présence du collet sur la bague extérieure contraint l'assemblage du palier puisque ladite bague extérieure ne peut pas être montée axialement autour des rouleaux préalablement disposés sur la piste de roulement de la bague intérieure. Ainsi, il est nécessaire de disposer d'abord les rouleaux à l'intérieur de la piste de roulement de la bague extérieure puis de monter la bague intérieure dans la bague extérieure en disposant les rouleaux sur la piste de roulement intérieure. Le document FR-2 600 131 prévoit d'assurer la rétention radiale des rouleaux à l'intérieur de la piste de roulement extérieure afin de pouvoir bénéficier d'un ensemble dont la cohésion est suffisante pour être manipulé avant et/ou pendant le montage de la bague intérieure.

Pour ce faire, les logements de rétention de la cage sont formés de cadres périphériques sur lesquels respectivement un rouleau est retenu en pouvant tourner autour de son axe propre, lesdits cadres périphériques étant disposés à l'intérieur d'un cône ayant les axes des rouleaux comme génératrice de sorte que lesdits rouleaux soient maintenus en appui radial vers l'intérieur sur lesdits cadres périphériques.

Toutefois, les ponts de la cage proposée par le document FR-2 600 131 sont disposés entre les rouleaux sensiblement au niveau du cercle primitif, ce qui, en augmentant la distance entre deux rouleaux adjacents, peut limiter le nombre de rouleaux et donc la capacité de charge du palier.

Le document US 1 982 899 décrit un procédé d'assemblage selon le préambule de la revendication 1.

L'invention vise à perfectionner l'art antérieur en proposant notamment un palier à roulement conique dont la bague extérieure est équipée d'un collet, dans lequel la cage de rétention des rouleaux est configurée de sorte à pouvoir assurer la cohésion des rouleaux dans la bague extérieure afin de faciliter l'assemblage du palier tout en conservant une capacité de charge optimale pour ledit palier. L'invention concerne un procédé d'assemblage suivant la revendication 1. D'autres objets et avantages de l'invention apparaîtront dans la description qui suit, faite en référence aux figures jointes, dans lesquelles :
- la figure 1 est une représentation partielle en coupe longitudinale d'un palier à roulement rassemblé selon un mode de réalisation de l'invention ;
- les figures 2 sont des représentations d'une cage de rétention pour un procédé d'assemblage d'un palier à roulement selon un mode de réalisation de l'invention, respectivement en perspective (figure 2a) et en vue avant (figure 2b) ;
- la figure 3 est une représentation en perspective d'une cage de rétention selon une variante de celle représentée sur les figures 2 ;
- les figures 4 sont des représentations en vue avant d'une cage de rétention pour un procédé d'assemblage d'un palier à roulement selon un mode de réalisation de l'invention, respectivement avant (figure 4a) et après déformation (figure 4b) ;
- les figures 5 et 6 représentent chacune en perspective une cage de rétention pour un palier à roulement selon un mode de réalisation ne faisant pas partie de l'invention.

En relation avec les figures, on décrit ci-dessous un palier à roulement comprenant une bague extérieure 1 et une bague intérieure 2 pourvues chacune d'une piste annulaire 1a, 2a de roulement entre lesquelles sont disposés des rouleaux coniques 3 de sorte à permettre la rotation relative desdites bagues autour d'un axe.

Dans la description, les termes « extérieur » et « intérieur » sont définis par rapport à l'axe de rotation du palier, respectivement pour une localisation éloignée et proche dudit axe. Les termes « axial » et « radial » sont également définis par rapport à l'axe, respectivement pour une direction suivant cet axe et s'éloignant ou se rapprochant de lui.

De façon avantageuse, les paliers selon l'invention, de par leur aptitude à supporter des efforts radiaux et axiaux importants, trouvent particulièrement leur application pour le guidage en rotation d'organe mécanique de transmission de couple, notamment dans des ponts moteurs de véhicule automobile, en étant utilisé par exemple en paire dans un montage en X.

Chacune des pistes de roulement 1a, 2a présente une portée axiale 4, 5 sur laquelle les rouleaux coniques 3 sont en appui par l'intermédiaire de leur périphérie tronconique, ladite portée axiale s'étendant entre un bord extérieur et un bord intérieur en présentant une géométrie tronconique.

Le palier à roulement est dit inversé en ce que la bague extérieure 1 est équipée d'un collet 6 sous la forme d'un épaulement annulaire de matière qui est réalisé sur le côté extérieur de ladite bague extérieure. Selon le mode de réalisation représenté, la bague intérieure 2 est dépourvue de collet, la portée axiale 5 de la piste de roulement intérieure 2a débouchant de part et d'autre de ladite bague intérieure.

Le collet 6 permet notamment le maintien des rouleaux coniques 3 entre les pistes de roulement 1a, 2a, notamment lorsque le palier est soumis à des charges axiales et/ou radiales. En particulier, la présence du collet 6 sur la bague extérieure 1 induit, par rapport à un collet solidaire de la bague intérieure 2, une vitesse de glissement dudit collet qui est réduite, une meilleure lubrification grâce à la centrifugation sur le collet 6 et un risque de grippage repoussé.

Le collet 6 présente une portée radiale 7 de roulement sur laquelle les rouleaux coniques 3 sont en appui par l'intermédiaire d'une face latérale 8a, ladite portée radiale s'étendant entre un bord extérieur et un bord intérieur en présentant une géométrie tronconique, lesdits bords étant annulaires et le diamètre dudit bord extérieur étant supérieur au diamètre dudit bord intérieur.

Le palier comprend une cage de rétention 9 qui est agencée pour assurer le maintien des rouleaux 3 dans l'espace de roulement conique lors de la rotation du palier. Pour ce faire, la cage de rétention 9 est notamment pourvue de cadres périphériques 10 sur lesquels respectivement un rouleau 3 est retenu en pouvant tourner autour de son axe propre Y, suivant un angle prédéterminé par rapport à l'axe de roulement du palier.

En particulier, la cage de rétention 9 présente une couronne extérieure 11 et, décalée axialement, une couronne intérieure 12, ladite couronne intérieure étant inscrite dans un diamètre qui est inférieur ou égal au diamètre dans lequel est inscrite ladite couronne extérieure. La cage 9 comprend une pluralité de ponts 13 s'étendant entre les couronnes 11, 12 de sorte à former entre deux ponts adjacents et un segment 11a, 12a de chacune desdites couronnes un cadre périphérique 10.

Dans les modes de réalisation représentés, les cadres périphériques 10 sont disposés à l'intérieur d'un cône ayant les axes Y des rouleaux 3 comme génératrice. Ainsi, les rouleaux 3 sont maintenus en appui radial vers l'intérieur sur les cadres périphériques 10, les segments 11a, 12a de chaque couronne 11, 12 étant disposés en regard axial de respectivement une face latérale 8a, 8b d'un rouleau 3.

Les segments 12a de la couronne intérieure 12 sont inscrits, au moins au niveau de leur zone centrale, dans un diamètre maximal Dₘₐₓ qui est séparé du diamètre D du bord intérieur de la portée axiale intérieure 5 d'une cote C qui est telle que C ≤ 20% D. Une telle disposition de la cage 9 permet de réduire la distance entre les rouleaux 3 et donc notamment de pouvoir conserver un nombre de rouleaux et donc une capacité de charge qui sont identiques à celui d'un palier à roulement conique standard. En particulier, la cote C peut être telle que C ≤ 5% D. Par ailleurs, les segments 12a peuvent être inscrits dans le diamètre maximal Dₘₐₓ. En variante, les bords des segments 12a peuvent être relevés dans un diamètre qui est supérieur à Dₘₐₓ, seule la zone centrale desdits segments étant inscrite dans le diamètre Dₘₐₓ.

De façon avantageuse, l'encombrement de la cage 9 dans l'espace de roulement conique est limité en prévoyant qu'au moins 80% du volume de matière de ladite cage soient disposés à l'intérieur du cône ayant les axes Y des rouleaux 3 comme génératrice.

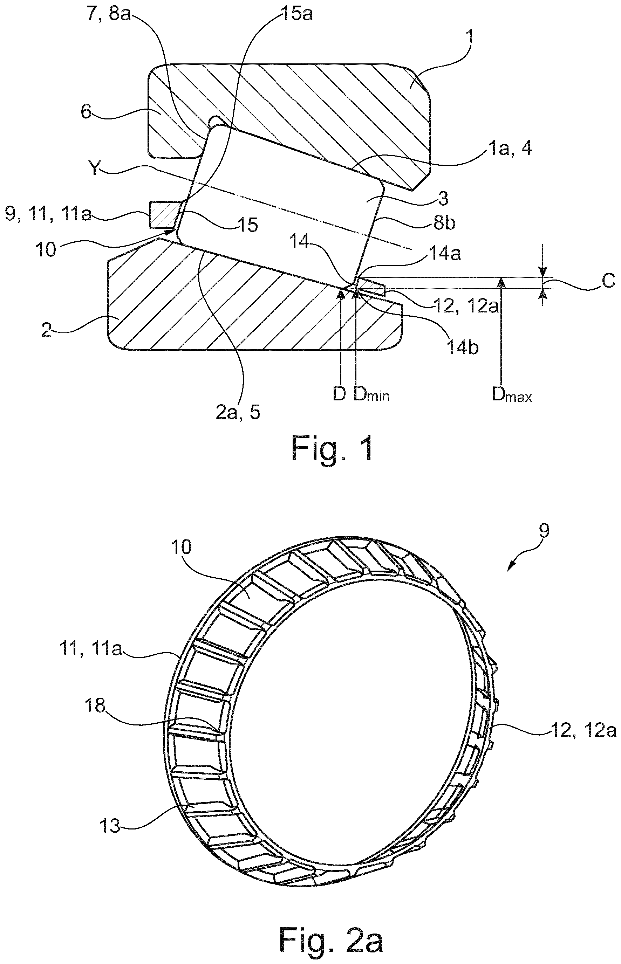

En relation avec la figure 1, chaque segment 12a de la couronne intérieure 12 comprend une face interne 14 qui est disposée en regard axial d'une face latérale 8b d'un rouleau 3. Chaque face interne 14 présente :
- un bord extérieur 14a présentant, au moins au niveau de sa zone centrale, le diamètre maximal Dₘₐₓ ;
- un bord intérieur 14b présentant, au moins au niveau de sa zone centrale, un diamètre minimal Dₘᵢₙ qui est supérieur ou égal au diamètre D du bord intérieur de la portée axiale intérieure 5.

En particulier, l'écart entre le diamètre minimal Dₘᵢₙ et le diamètre D peut être supérieur ou égale à 0,15 mm afin de garantir un jeu radial minimal de rotation entre la couronne intérieure 12 et la bague intérieure 2.

En outre, chaque segment 11a de la couronne extérieure 11 présente une face interne 15 disposée en regard axial de la face latérale 8a d'un rouleau 3. De façon avantageuse relativement à l'encombrement de la cage 9 dans l'espace de roulement, chaque face interne 15 présente un bord extérieur 15a disposé à l'intérieur du cône ayant les axes Y des rouleaux 3 comme génératrice.

On décrit ci-dessous l'assemblage d'un palier à roulement conique inversé dans lequel, en raison de la présence du collet 6 sur la bague extérieure 1, les rouleaux 3 sont d'abord disposés à l'intérieur de la piste de roulement 1a de ladite bague extérieure avant le montage de la bague intérieure 2, ladite bague intérieure étant ensuite montée dans ladite bague extérieure en disposant lesdits rouleaux sur la piste de roulement intérieure 2a.

Le procédé d'assemblage prévoit, après disposition des rouleaux 3 à l'intérieur de la piste de roulement extérieure 1a, de disposer chaque rouleau 3 sur un cadre périphérique 10 afin de pouvoir bénéficier d'un ensemble bague extérieure 1 / rouleaux 3 / cage de rétention 9 dont la cohésion est suffisante pour être manipulé avant et/ou pendant le montage de la bague intérieure 2.

En outre, avant montage de la bague intérieure 2, les segments 12a de la couronne intérieure 12 sont disposés par rapport aux faces latérales 8b des rouleaux 3 de sorte que, après montage de ladite bague intérieure, au moins la zone centrale desdits segments soit inscrite dans un diamètre maximal Dₘₐₓ qui est séparé du diamètre D du bord intérieur de la portée axiale intérieure 5 d'une cote C qui est telle que C ≤ 20% D.

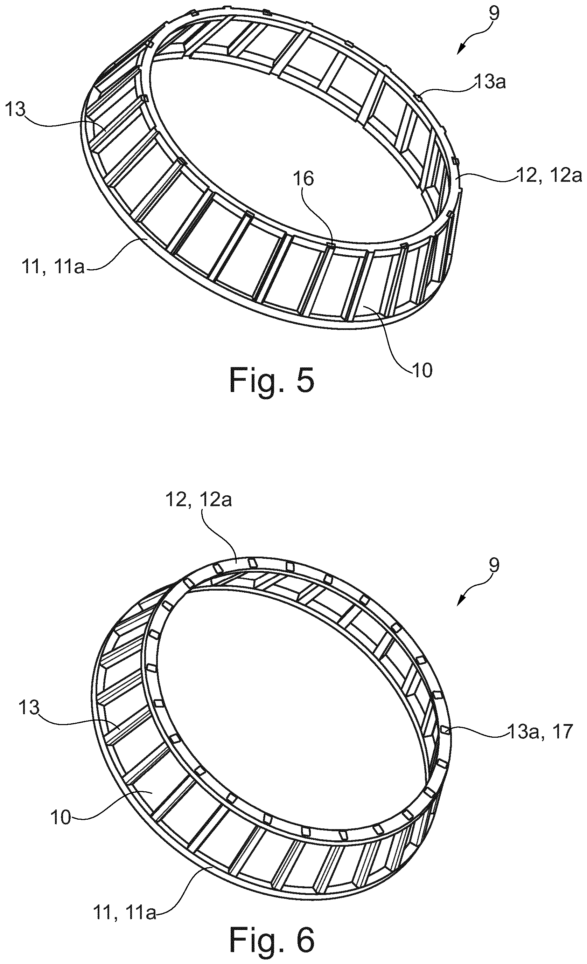

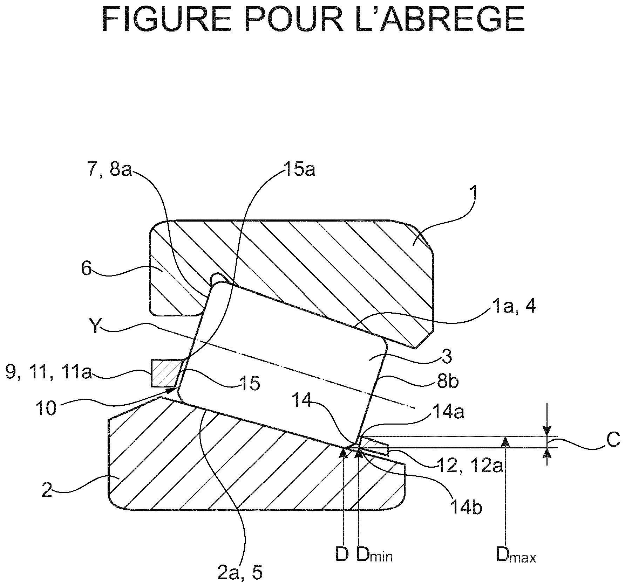

Pour permettre un tel assemblage, les figures 5 et 6 représentent respectivement une cage 9 formée de deux parties comprenant chacune une couronne 11, 12, lesdites parties étant associées entre elles pour former les cadres périphériques 10. Une telle réalisation ne fait pas partie de l'invention. Elle permet notamment d'éviter la déformation de la cage 9, lors de la disposition des rouleaux 3 sur les cadres périphériques 10.

En particulier, chaque partie de la cage 9 peut être montée respectivement d'un côté des rouleaux 3 préalablement disposés dans la piste de roulement extérieure 1a, lesdites parties étant ensuite associées en disposant chaque rouleau 3 sur un cadre périphérique 10.

Selon les réalisations représentées, les ponts 13 présentent des moyens d'association de la cage 9, au moins une couronne 11, 12 présentant des moyens complémentaires auxdits moyens d'association. Ainsi, lors du montage de la cage 9, les ponts 13 sont déplacés axialement entre les rouleaux 3 puis les couronnes 11, 12 sont associées entre elles de manière à former les cadres périphériques 10 sur lesquels sont disposés lesdits rouleaux.

En relation avec la figure 5, chaque couronne 11, 12 est équipée d'un pont 13 sur deux, l'extrémité libre 13a de chaque pont 13 étant destinée à être associée à l'autre couronne 12, 11 entre deux ponts 13 adjacents de celle-ci. Pour ce faire, chaque couronne 11, 12 présente une empreinte d'encliquetage 16 de l'extrémité libre 13a des ponts 13.

En relation avec la figure 6, la couronne extérieure 11 est équipée des ponts 13 dont les extrémités libres 13a sont associées dans des ouvertures 17 formées dans la couronne intérieure 12. En particulier, les ponts 13 peuvent être associés de façon irréversible aux couronnes 11, 12, par exemple par une opération de soudure ou de sertissage à chaud dans le cas d'une cage 9 en matériau plastique, ou par un emboutissage local pour une cage 9 métallique.

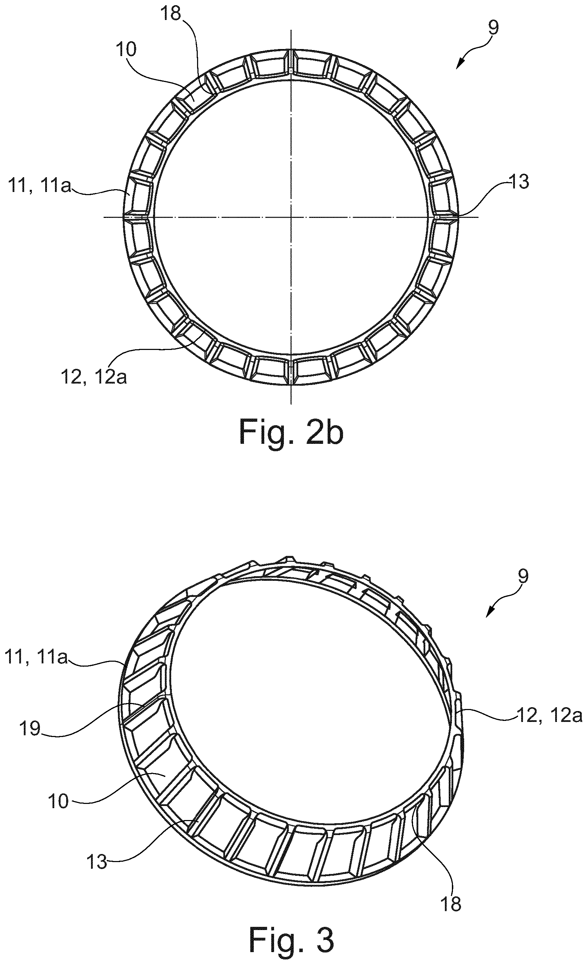

En relation avec les figures 2 à 4, on décrit ci-dessous des modes de réalisation selon l'invention d'une cage de rétention 9 qui peut être déformée pour disposer chaque rouleau 3 sur un cadre périphérique 10 de sorte que, après ladite déformation, au moins la zone centrale des segments 12a de la couronne intérieure 12 soit inscrite dans un diamètre maximal Dₘₐₓ qui est séparé du diamètre D du bord intérieur de la portée axiale intérieure 5 d'une cote C qui est telle que C ≤ 20% D.

Selon une réalisation, la disposition de chaque rouleau 3 sur un cadre périphérique 10 comprend une translation axiale relative de la cage 9 par rapport à la bague extérieure 1, ladite étant déformée lors de ladite translation. En particulier, lors de cette translation, les rouleaux 3 peuvent être maintenus contre la portée axiale 4 de la piste de roulement extérieure 1a à l'aide d'un outil.

Selon l'invention, la cage 9 présente une élasticité permettant la déformation réversible d'au moins les segments intérieurs 12a. En particulier, la cage 9 peut être réalisée à partir d'un matériau polymère favorisant sa déformation élastique.

Lors de la translation, l'appui sur les rouleaux 3 déforme au moins les segments intérieurs 12a afin que ces derniers présentent un état contraint ayant un diamètre extérieur qui est suffisamment réduit pour permettre la disposition de chaque rouleau 3 sur un cadre périphérique 10. Ensuite, la disposition des segments intérieurs 12a en regard des faces latérales 8b des rouleaux 3 est réalisée par retour élastique desdits segments après leur course d'appui afin que la couronne intérieure 12 retrouve son diamètre nominal. Il en résulte un montage de la cage 9 simplifié, tout en conservant les caractéristiques mécaniques de ladite cage.

En relation avec les figures 2, les segments intérieurs 12a sont reliés aux ponts 13 par une zone de jonction 18 qui est agencée pour faciliter un déplacement intérieure desdits segments par rapport auxdits ponts. En particulier, les zones de jonction 18 peuvent être agencées pour former une articulation, notamment en réduisant la rigidité au niveau des extrémités intérieures des ponts 13 et de la couronne intérieure 12.

En variante, en relation avec la figure 3, la cage 9 présente une fente de débattement 19 qui est réalisée dans la longueur d'un pont 13, en débouchant de part et d'autre dudit pont pour faciliter la variation du diamètre des couronnes 11, 12 lors de l'appui des segments intérieurs 12a sur les rouleaux 3.

Selon un autre mode de réalisation ne faisant pas partie de l'invention et éventuellement complémentaire, au moins les segments 12a de la couronne intérieure 12 sont déformés mécaniquement et/ou thermiquement après la translation axiale de la cage 9 afin d'augmenter le diamètre extérieur de ladite couronne intérieure, notamment pour être inscrits dans le diamètre maximal Dₘₐₓ requis. En particulier, la déformation peut être réalisée mécaniquement au moyen d'un outil de conformage.

Cette déformation des segments intérieurs 12a après la translation axiale permet notamment de limiter et/ou d'éviter la mise en traction desdits segments sur leur course d'appui en translation sur les rouleaux 3 et donc de prévenir les risques d'amorce de rupture, notamment au niveau des zones de jonction 18 entre les segments 12a et les ponts 13.

De façon avantageuse, la cage 9 peut être réalisée à partir d'un matériau métallique notamment par emboutissage d'une tôle en acier de fine épaisseur, par exemple en formant les ponts 13 par usinage puis découpe de matière entre les couronnes 11, 12. En outre, le matériau métallique peut avoir subi un traitement de surface pour améliorer les performances de contact entre la cage 9 et les rouleaux 3.

En fonction des applications envisagées, le matériau formant au moins les segments intérieurs 12a peut présenter des propriétés de mémoire de forme afin de permettre la déformation thermique desdits segments d'une configuration convexe à une configuration concave. En outre, la déformation peut être réversible afin de permettre le démontage de la cage 9.

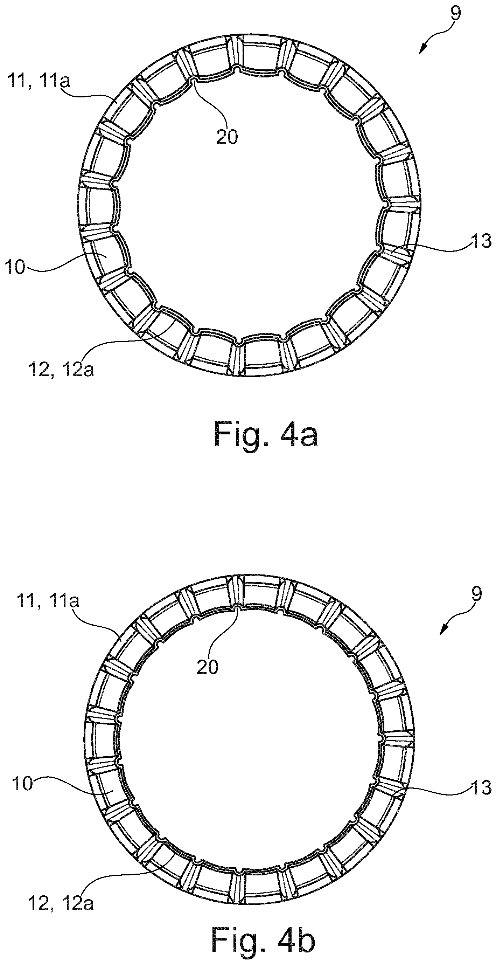

En relation avec les figures 4, on décrit ci-dessous une cage de rétention 9 dans laquelle les ponts 13 sont nervurés, en présentant une section en U au moins au niveau de leurs extrémités intérieures qui relient deux segments intérieurs 12a adjacents. En particulier, les sections en U permettent d'obtenir une cage 9 conciliant une bonne résistance mécanique à un poids réduit.

La couronne intérieure 12 est ainsi formée d'une succession de segments 12a reliés par des jonctions 20 en U. En particulier, les jonctions 20 en U présentent une ouverture orientée vers l'intérieur, les cadres périphériques 10 s'étendant sur l'extérieur desdites jonctions en U, ce qui permet notamment de diminuer les frottements sur les ponts 13 des rouleaux 3 disposés sur les cadres périphériques 10.

Dans le mode de réalisation représenté, les segments intérieurs 12a sont reliés entre eux par les extrémités des jonctions 20 en U afin de faciliter une déformation radiale desdits segments. Par ailleurs, les ponts 13 sont reliés au niveau d'une paroi de la couronne extérieure 11 afin de rigidifier la cage 9 au niveau de ladite couronne extérieure.

En particulier, les segments intérieurs 12a sont déformables depuis une configuration, par exemple bombée concave, (figure 4a), permettant le passage de la couronne intérieure 12 sous les rouleaux 3 et la disposition desdits rouleaux sur les cadres périphériques 10, vers une configuration, par exemple bombée convexe (figure 4b) permettant la retenue desdits rouleaux sur lesdits cadres périphériques.

## Revendications

1. Procédé d'assemblage d'un palier à roulement comprenant une bague extérieure (1) et une bague intérieure (2) pourvues chacune d'une piste annulaire (1a, 2a) de roulement entre lesquelles sont disposés des rouleaux coniques (3) de sorte à permettre la rotation relative desdites bagues autour d'un axe, chacune desdites pistes de roulement présentant une portée axiale (4, 5) sur laquelle les rouleaux coniques (3) sont en appui par l'intermédiaire de leur périphérie tronconique, lesdites portées axiales s'étendant chacune entre un bord extérieur et un bord intérieur en présentant une géométrie tronconique, la bague extérieure (1) étant équipée d'un collet (6) présentant une portée radiale (7) de roulement sur laquelle les rouleaux coniques (3) sont en appui par l'intermédiaire d'une face latérale (8a), ledit palier comprenant une cage de rétention (9) présentant une couronne extérieure (11), une couronne intérieure (12) et une pluralité de ponts (13) s'étendant entre lesdites couronnes de sorte à former entre deux ponts (13) adjacents et un segment (11a, 12a) de chacune desdites couronnes un cadre périphérique (10) sur lequel un rouleau (3) est retenu en pouvant tourner autour de son axe propre Y, les segments (12a) étant déformables depuis une configuration de disposition des rouleaux (3) sur les cadres périphériques (10) vers une configuration de retenue desdits rouleaux sur lesdits cadres périphériques, ledit procédé prévoyant, après disposition des rouleaux (3) à l'intérieur de la piste de roulement (1a) de la bague extérieure (1), de disposer chaque rouleau (3) sur un cadre périphérique (10) en déformant la cage de rétention (9), la bague intérieure (2) étant ensuite montée dans la bague extérieure (1) en disposant les rouleaux (3) sur la piste de roulement intérieure (2a), la disposition de chaque rouleau (3) sur un cadre périphérique (10) comprenant une translation axiale relative de la cage de rétention (9) par rapport à la bague extérieure (1), au moins les segments (12a) de la couronne intérieure (12) étant déformés réversiblement par appui sur les rouleaux (3) lors de la translation afin de présenter un état contraint ayant un diamètre extérieur qui est suffisamment réduit pour permettre la disposition de chaque rouleau (3) sur un cadre périphérique (10), chaque segment (12a) de la couronne intérieure (12) présentant une face interne (14) qui est disposée en regard axial de la face latérale (8b) d'un rouleau (3), ledit procédé étant **caractérisé en ce que** la déformation est réalisée lors de la translation axiale relative de la cage de rétention (9) par rapport à la bague extérieure (1) pour que, après déformation et par retour élastique desdits segments après leur course d'appui :
- au moins la zone centrale des segments (12a) de la couronne intérieure (12) soit inscrite dans un diamètre maximal Dₘₐₓ qui est séparé du diamètre D du bord intérieur de la portée axiale intérieure (5) d'une cote C qui est telle que C ≤ 20% D, la face interne (14) ayant un bord extérieur (14a) présentant, au moins au niveau de sa zone centrale, le diamètre maximal Dₘₐₓ ;
- un bord intérieur (14b) de la face interne (14) présente, au moins au niveau de sa zone centrale, un diamètre minimal Dₘᵢₙ qui est supérieur ou égal audit diamètre D.

2. Procédé d'assemblage selon la revendication 1, **caractérisé en ce qu'**au moins 80% du volume de matière de la cage (9) sont disposés à l'intérieur du cône ayant les axes Y des rouleaux (3) comme génératrice.

3. Procédé d'assemblage selon l'une des revendications 1 ou 2, **caractérisé en ce que** la portée axiale (5) de la piste de roulement intérieure (2a) débouche de part et d'autre de la bague intérieure (2).

4. Procédé d'assemblage selon l'une quelconque des revendications 1 à 3, **caractérisé en ce que** les ponts (13) présentent une section en U au moins au niveau de leurs extrémités intérieures, la couronne intérieure (12) étant formée d'une succession de segments (12a) reliés par des jonctions (20) en U.

5. Procédé d'assemblage selon la revendication 4, **caractérisé en ce que** l'ouverture des jonctions (20) en U est orientée vers l'intérieur, les cadres périphériques (10) s'étendant sur l'extérieur desdites jonctions en U.

6. Procédé d'assemblage selon l'une des revendications 5 ou 6, **caractérisé en ce que** les segments (12a) sont reliés entre eux par les extrémités des jonctions (20) en U afin de faciliter une déformation radiale desdits segments.

## Patentansprüche

1. Verfahren zum Zusammenfügen eines Wälzlagers, das einen Außenring (1) und einen Innenring (2) umfasst, die jeweils mit einer ringförmigen Laufbahn (1a, 2a) versehen sind, zwischen welchen konische Walzen (3) derart angeordnet sind, dass sie das relative Drehen der Ringe um eine Achse erlauben, wobei jede der Laufbahnen eine axiale Auflage (4, 5) aufweist, auf der die konischen Walzen (3) über ihren kegelförmigen Umfang in Auflage sind, wobei sich die axialen Auflagen jeweils zwischen einem Außenrand und einem Innenrand erstrecken und eine kegelförmige Geometrie aufweisen, wobei der Außenring (1) mit einem Bund (6) ausgestattet ist, der eine radiale Laufauflage (7) aufweist, auf der die konischen Walzen (3) über eine Seitenfläche (8a) in Auflage sind, wobei das Lager einen Rückhaltekäfig (9) umfasst, der einen Außenkranz (11), einen Innenkranz (12) und eine Vielzahl von Brücken (13) aufweist, die sich zwischen den Kränzen derart erstrecken, dass zwischen zwei benachbarten Brücken (13) und einem Segment (11a, 12a) jedes der Kränze ein umfänglicher Rahmen (10) gebildet wird, auf dem eine Walze (3) gehalten wird, indem sie um ihre eigene Achse Y drehen kann, wobei die Segmente (12a) ausgehend von einer Anordnungskonfiguration der Walzen (3) auf den umfänglichen Rahmen (10) zu einer Rückhaltekonfiguration der Walzen auf den umfänglichen Rahmen verformbar sind, wobei das Verfahren nach dem Anordnen der Walzen (3) in dem Inneren der Laufbahn (1a) des Außenrings (1) vorsieht, jede Walze (3) auf einem umfänglichen Rahmen (10) anzuordnen, indem der Rückhaltekäfig (9) verformt wird, wobei der Innenring (2) anschließend in den Außenring (1) montiert wird, indem die Walzen (3) auf der inneren Laufbahn (2a) angeordnet werden, wobei die Anordnung jeder Walze (3) auf einem umfänglichen Rahmen (10) eine relative axiale Verschiebung des Rückhaltekäfigs (9) in Bezug auf den Außenring (1) umfasst, wobei mindestens die Segmente (12a) des Innenkranzes (12) umkehrbar durch Auflegen auf den Walzen (3) bei der Verschiebung verformbar sind, um einen angespannten Zustand aufzuweisen, der einen Außendurchmesser hat, der ausreichend verringert ist, um die Anordnung jeder Walze (3) auf einem umfänglichen Rahmen (10) zu erlauben, wobei jedes Segment (12a) des Innenkranzes (12) eine innere Fläche (14) aufweist, die in axialer Gegenüberlage von der seitlichen Fläche (8b) einer Walze (3) angeordnet ist, wobei das Verfahren **dadurch gekennzeichnet ist, dass** die Verformung bei der relativen axialen Verschiebung des Rückhaltekäfigs (9) in Bezug auf den Außenring (1) ausgeführt wird, damit nach dem Verformen und durch elastische Rückkehr der Segmente nach ihrem Auflagehub:
- mindestens die zentrale Zone der Segmente (12a) des Innenkranzes (12) in einen maximalen Durchmesser Dₘₐₓ fällt, der von dem Durchmesser D des Innenrands der inneren axialen Auflage (5) um ein Maß C getrennt ist, das derart ist, dass C ≤ 20 % D ist, wobei die innere Fläche (14) einen Außenrand (14a) hat, der mindestens im Bereich seiner zentralen Zone den maximalen Durchmesser Dₘₐₓ aufweist;
- ein Innenrand (14b) der inneren Fläche (14) mindestens im Bereich seiner zentralen Zone einen Mindestdurchmesser Dₘᵢₙ aufweist, der größer oder gleich dem Durchmesser D ist.

2. Verfahren zum Zusammenfügen nach Anspruch 1, **dadurch gekennzeichnet, dass** mindestens 80 % des Materialvolumens des Käfigs (9) im Inneren des Kegels angeordnet sind, der die Y-Achsen der Walzen (3) als Mantellinie hat.

3. Verfahren zum Zusammenfügen nach einem der Ansprüche 1 oder 2, **dadurch gekennzeichnet, dass** die axiale Auflage (5) der inneren Laufbahn (2a) auf beiden Seiten des Innenrings (2) mündet.

4. Verfahren zum Zusammenfügen nach einem der Ansprüche 1 bis 3, **dadurch gekennzeichnet, dass** die Brücken (13) einen U-Schnitt mindestens im Bereich ihrer inneren Enden aufweisen, wobei der Innenkranz (12) aus einer Abfolge von Segmenten (12a) gebildet ist, die durch U-Verbindungen (20) verbunden sind.

5. Verfahren zum Zusammenfügen nach Anspruch 4, **dadurch gekennzeichnet, dass** die Öffnung der U-Verbindungen (20) zu dem Inneren gerichtet ist, wobei sich die umfänglichen Rahmen (10) auf dem Äußeren der U-Verbindungen erstrecken.

6. Verfahren zum Zusammenfügen nach einem der Ansprüche 5 oder 6, **dadurch gekennzeichnet, dass** die Segmente (12a) zwischen einander durch die Enden der U-Verbindungen (20) verbunden sind, um ein radiales Verformen der Segmente zu erleichtern.

## Claims

1. Method for assembling a roller bearing comprising an outer ring (1) and an inner ring (2) each provided with an annular raceway (1a, 2a) between which are arranged taper roller bearings (3) in such a way as to allow for the relative rotation of said rings about an axis, with each one of said raceways having an axial support (4, 5) whereon the taper roller bearings (3) are bearing against by the intermediary of the tapered periphery thereof, said axial supports extending each one between an outside edge and an inside edge by having a tapered geometry, with the outer ring (1) provided with a collar (6) having a radial bearing support (7) whereon the taper roller bearings (3) are bearing against by the intermediary of a lateral face (8a), said bearing comprising a retaining cage (9) that has an outer crown (11), an inner crown (12) and a plurality of bridges (13) extending between said crowns in such a way as to form between two adjacent bridges (13) and a segment (11a, 12a) of each one of said crowns a peripheral frame (10) whereon a bearing (3) is retained by being able to rotate about its own axis Y, with the segments (12a) able to be deformed from a configuration with an arrangement of the bearings (3) on the peripheral frames (10) to a configuration of retaining said bearings on said peripheral frames, with said method providing, after the arrangement of the bearings (3) inside the raceway (1a) of the outer ring (1), to arrange each bearing (3) on a peripheral frame (10) by deforming the retaining cage (9), with the inner ring (2) then being mounted in the outer ring (1) by arranging the bearings (3) on the inside raceway (2a), with the arrangement of each bearing (3) on a peripheral frame (10) comprising a relative axial translation of the retaining cage (9) with respect to the outer ring (1), with at least the segments (12a) of the inner crown (12) being reversibly deformed by bearing on the bearings (3) during the translation in order to have a stressed state having an outer diameter that is sufficiently reduced to allow for the arrangement of each bearing (3) on a peripheral frame (10), each segment (12a) of the inner crown (12) having an internal face (14) which is arranged axially facing the lateral face (8b) of a bearing (3), said method **characterised in that** the deformation is carried out during the relative axial translation of the retaining cage (9) in relation to the outer ring (1) so that, after deformation and via elastic return of said segments after the bearing course thereof:
- at least the central zone of the segments (12a) of the inner crown (12) is inscribed in a maximum diameter Dₘₐₓ which is separated from the diameter D of the inside edge of the inside axial support (5) by a dimension C which is such that C ≤ 20% D, with the internal face (14) having an outside edge (14a) having, at least on the central zone thereof, the maximum diameter Dₘₐₓ;
- an inside edge (14b) of the internal face (14) has, at least on the central zone thereof, a minimum diameter Dₘᵢₙ which is greater than or equal to said diameter D.

2. Method for assembling according to claim 1, **characterised in that** at least 80% of the volume of the material of the cage (9) is arranged inside the cone that has the axes Y of the bearings (3) as a generatrix.

3. Method for assembling according to one of claims 1 or 2, **characterised in that** the axial support (5) of the inside raceway (2a) opens on either side of the inner ring (2).

4. Method for assembling according to any of claims 1 to 3, **characterised in that** the bridges (13) have a U-shaped section at least on the inside ends thereof, with the inner crown (12) formed from a succession of segments (12a) connected by U-shaped junctions (20).

5. Method for assembling according to claim 4, **characterised in that** the opening of the U-shaped junctions (20) is directed inwards, with the peripheral frames (10) extending over the outside of said U-shaped junctions.

6. Method for assembling according to one of claims 5 or 6, **characterised in that** the segments (12a) are connected together by the ends of the U-shaped junctions (20) in order to facilitate a radial deformation of said segments.
